(19) Europäisches Patentamt
European Patent Office
Office européen des brevets

(11) **EP 2 197 150 A1**

(12) **EUROPEAN PATENT APPLICATION**
published in accordance with Art. 153(4) EPC

(43) Date of publication:
**16.06.2010 Bulletin 2010/24**

(51) Int Cl.:
*H04L 9/32* (2006.01)     *H04L 9/00* (2006.01)

(21) Application number: **08757719.3**

(22) Date of filing: **13.06.2008**

(86) International application number:
**PCT/CN2008/071308**

(87) International publication number:
**WO 2009/039732 (02.04.2009 Gazette 2009/14)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.09.2007 CN 200710151722**

(71) Applicant: **Huawei Technologies Co., Ltd.**
**Shenzhen, Guangdong Province 518129 (CN)**

(72) Inventor: **LIU, Ya**
**Shenzhen**
**Guangdong 518129 (CN)**

(74) Representative: **Pfenning, Meinig & Partner GbR**
**Patent- und Rechtsanwälte**
**Theresienhöhe 13**
**80339 München (DE)**

(54) **THE METHOD AND THE DEVICE FOR AUTHENTICATING THE NEIGHBOR BASED ON THE GROUP KEY MANAGEMENT**

(57) Method and device for authenticating a legal neighbor in group key management (GKM) are disclosed. The method includes: members on a local network that needs the automatic GKM service store a group shared key and a group authentication algorithm; an authenticating member receives a first authentication value and authentication information of an authenticated member sent from the authenticated member, where the first authentication value is calculated by the authenticated member by using the group shared key and the authentication information of the authenticated member according to the group authentication algorithm; the authenticating member calculates a second authentication value by using the authentication information of the authenticated member and the group shared key according to the group authentication algorithm; the authenticating member authenticates the authenticated member as a legal neighbor when confirming that the first authentication value is the same as the second authentication value.

FIG. 2

EP 2 197 150 A1

**Description**

**Field of the Invention**

The present invention relates to a group key management technology, and in particular, to a method and device for authenticating a legal neighbor in group key management.

**Background of the Invention**

Internet protocol security (IPSsec) is a general name of a group of security protocols, and includes key management and data security. IPsec works at the IP layer in a point-to-point mode, and can provide services such as authorization, authentication, key negotiation, key update, and data security.

The Open Shortest Path First version 3 (OSPFv3) is an intra-domain routing protocol. RFC 4552 proposes a solution to the security problem of OSPFv3 by using IPsec. RFC 4552 proposes a group security association (GSA) to solve the security problem of OSPFv3 running on a multicast network. The GSA includes a group security algorithm and a group key shared by the routers on the network. The routers perform OSPF communications and establish routes under the protection of the GSA.

When a group key expires or is revealed, a new group key must be used to replace the expired or revealed key. The routers must obtain an updated GSA after the group key is updated. In this case, the manual configuration has disadvantages such as poor scalability and low security, and is not applicable in scenarios where a lot of multicast networks and a lot of routers are used.

To overcome the preceding disadvantages, the OSPF and routing protocol security requirements (RPsec) working group proposes a group key management mechanism. The group key management mechanism, based on the Group Key Management (GKM) Protocol formulated by the multicast security (MSEC) working group, is intended to enable the routers to automatically obtain the updated GSA after the group key is updated, so as to replace the manual configuration method.

The group key management based on the GKM Protocol of MSEC may bring about the following problems: Because the GKM Protocol of MSEC is based on the client/server model, a route from the client to the server must be available when this protocol runs. However, in the OSPFv3 IPsec scenario, the route is established by the OSPFv3 routers, and the route establishment process requires protection over the GKM protocol of MSEC, where the protection is provided by the GSA. The routers can establish a route only when the routers download the GSA from a group controller key server (GCKS), but the routers cannot download the GSA from the GCKS before establishing the route, and thus a conflict occurs.

To solve the preceding conflict, the GCKS may be deployed in three scenarios, in which the routers download the GSA from the GCKS in different modes. In a preferred scenario, a delegate is deployed on each OSPFv3 multicast network that needs the automatic GKM service, and a remote GCKS is deployed on a centralized basis. When the network is initially started, an initial GSA is configured for the delegate and routers on the multicast network. Then, the delegate and the routers establish routes to the GCKS respectively by using the initial GSA, and register with the GCKS through the preceding routes. After the registration is completed, the routers become the members of the GCKS. After the group key is updated, the delegate is responsible for receiving GSA packets pushed by the remote GSKS through the routes to the GCKS and distributing the packets to the routers on the multicast network.

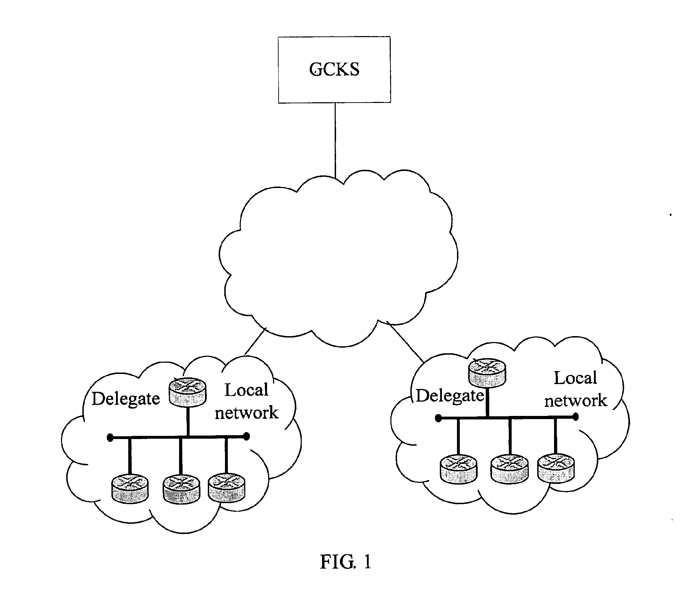

FIG. 1 shows the network structure in this scenario. This scenario has the following advantages: The GCKS is deployed on a centralized basis, thus facilitating centralized management and centralized protection; compared with the scenario where a GCKS is deployed on each multicast network, this scenario suffers from fewer attack risks; the deployment cost is low, and the GCKS can serve multiple OSPFv3 multicast networks at the same time; the packets are forwarded by the delegate, which prevents the GCKS from pushing the updated GSA to all the members in turn when inter-network multicast is unavailable, thus solving the problem of poor scalability.

The preceding delegate may be configured logically and a router on the network may act as the delegate. Thus, the delegate should be elected dynamically; that is, the delegate is dynamically generated among the routers because the election-free solution in the prior art has a lot of disadvantages. For example, if a physical delegate is configured, the delegate function cannot be resumed and the GKM service may be interrupted in the case of breakdown and restart of the routers. This problem cannot be solved even if multiple physical delegates are configured in each multicast network. In addition, this solution increases the deployment cost. Alternatively, a router may be manually specified as the delegate when the network is initially started; the remote GCKS manages the delegate dynamically during the running of the network; when finding that the specified delegate is faulty, the remote GCKS specifies another router on the network as a new delegate. This solution may also avoid electing and authenticating the delegate. However, all the routers on the network may be restarted in case of power failures or disasters. As a result, the remote GCKS cannot communicate with the routers, making it difficult to specify a delegate. In this case, the GKM service may be interrupted unless the routers have state buffer functions, that is, unless a router, which acts as the delegate before being restarted, continues acting as the delegate after being restarted. Even if the router has the state buffer function, the GKM service may also be interrupted if the router that acts as the delegate is slowly restarted or cannot be restarted.

Thus, dynamic election is necessary. During the implementation of dynamic election, it is important to guarantee the legality of the elected router. A router participating in the election should be able to prove that the router is a legal candidate and also able to check whether other routers participating in the election are legal candidates. In this way, only the legal router can participate in the election, thus preventing attackers from participating in the delegate election as a legal router or from destroying the election process.

During the implementation of the present invention, the inventor discovers at least the following problems in the prior art:

An authentication method in the delegate election is provided in the prior art. In this method, when the network is initially started, a legal neighbor list is manually configured for each router, where the legal neighbor list lists all the legal neighbors by router ID; during the running of the network, the remote GCKS can dynamically update the legal neighbor list, and send the updated legal neighbor list to each router. In this method for authenticating the legal neighbors based on the legal neighbor list, the authentication must be implemented between the routers, and the authentication must be implemented by using a digital certificate. That is, the digital certificate is used to authenticate the identity of a router first, and then the legal neighbor list is used to check whether the router is a legal neighbor. In this solution, the digital certificate must be used, thus causing disadvantages such as dependency on the public key interface (PKI) and difficulty in deployment.

The preceding description is based on the legal neighbor authentication requirement in case of dynamic delegate election in the OSPFv3 IPsec scenario, and describes the disadvantages of the solution for authenticating a legal neighbor in group key management in the prior art. These disadvantages may also exist when the legal neighbor authentication is implemented in other scenarios.

## Summary of the Invention

Embodiments of the present invention provide a method for authenticating a legal neighbor in group key management (GKM), so that the specific implementation mode for authenticating an entity is more flexible.

Embodiments of the present invention provide a device for authenticating a legal neighbor in GKM. With this device, the specific implementation mode for authenticating an entity is not limited, thus featuring good flexibility.

A method for authenticating a legal neighbor in GKM according to an embodiment of the present invention includes storing, by members on a local network that needs the automatic GKM service, a group shared key and a group authentication algorithm, and when the members on the local network that needs the automatic GKM service authenticate a legal neighbor, the method further includes:

by an authenticating member, receiving a first authentication value and authentication information of an authenticated member sent from the authenticated member, where the first authentication value is calculated by the authenticated member by using the group shared key and the authentication information stored in the authenticated member according to the group authentication algorithm stored in the authenticated member;

calculating a second authentication value by using the received authentication information of the authenticated member and the group shared key stored in the authenticating member according to the group authentication algorithm stored in the authenticating member; and

authenticating the authenticated member as a legal neighbor when confirming that the first authentication value is the same as the second authentication value.

A device for authenticating a legal neighbor in GKM according to an embodiment of the present invention includes a storing module, a calculating module, and an authenticating module.

The storing module is configured to store a group shared key and a group authentication algorithm.

The calculating module is configured to: calculate a first authentication value by using the authentication information of the device and the group shared key in the storing module according to the group authentication algorithm in the storing module, and send the authentication information of the device and the first authentication value to other devices; receive a first authentication value and authentication information of other devices sent from other devices, and calculate a second authentication value by using the group shared key in the storing module and the authentication information of other devices according to the group authentication algorithm in the storing module.

The authenticating module is configured to authenticate other devices as legal neighbors when confirming that the received first authentication value is the same as the calculated second authentication value.

The method and device for authenticating a legal neighbor in GKM according to embodiments of the present invention is implemented based on the group shared key and group authentication algorithm, without using the identity of the neighbor during the authentication. Compared with the prior art, embodiments of the present invention do not limit the implementation mode for authenticating an entity, thus featuring better flexibility.

## Brief Description of the Drawings

FIG. 1 shows a structure of a local network where a delegate is deployed in the prior art;
FIG. 2 is a flowchart of a method for authenticating a legal neighbor in GKM according to an embodiment of the present invention;
FIG. 3 shows a structure of a device for authenticating a legal neighbor according to GKM in an embodiment of the present invention; and
FIG. 4 shows a structure of a calculating module in the device for authenticating a legal neighbor shown in FIG. 3.

## Detailed Description of the Embodiments

For better understanding of the objective and merits of the present invention, the present invention is hereinafter described in detail with reference to the accompanying drawings.

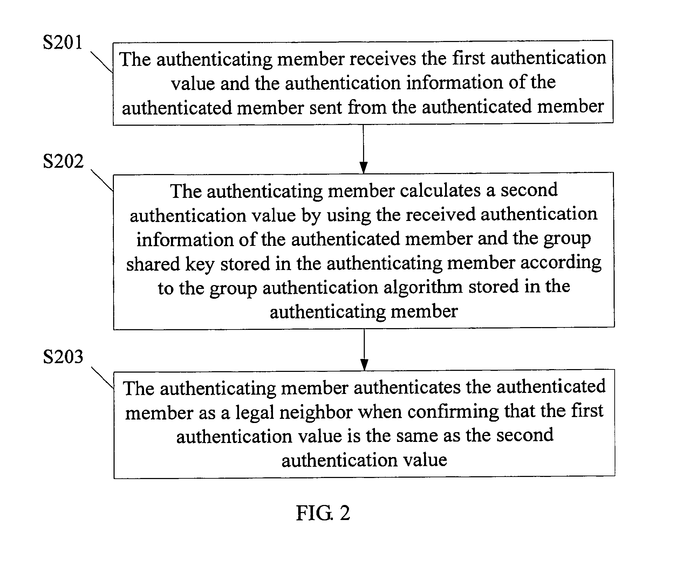

The following describes the method for authenticating a legal neighbor in GKM according to an embodiment of the present invention. As show in FIG. 2, the method includes: The members on a local network who need the automatic GKM service store a group shared key and a group authentication algorithm; when the members on the local network that needs the automatic GKM service authenticate a legal neighbor, the method further includes the following steps:

S201: The authenticating member receives a first authentication value and authentication information of the authenticated member from the authenticated member, where the first authentication value is calculated by the authenticated member by using the group shared key and authentication information stored in the authenticated member according to the group authentication algorithm stored in the authenticated member.

In S201, on the local network that needs the automatic GKM service, the authenticating member is a member that authenticates whether other members are legal neighbors, and the authenticated member is a member that needs to undergo the legal neighbor authentication. Because the members on the local network that needs the automatic GKM service store the group shared key and the group authentication algorithm, both the authenticating member and the authenticated member store the group shared key and group authentication algorithm. The authentication information of the authenticated member may be in different forms in different scenarios. It can be used by the authenticating member to calculate a second authentication value in subsequent steps.

S202: The authenticating member calculates a second authentication value by using the received authentication information of the authenticated member and the group shared key stored in the authenticating member according to the group authentication algorithm stored in the authenticating member.

S203: The authenticating member authenticates the authenticated member as a legal neighbor when confirming that the first authentication value is the same as the second authentication value.

In S203, if the authenticated member is a legal member on the local network that needs the automatic GKM service, the authenticated member stores the same group shared key and group authentication algorithm as the authenticating member. In this case, the first authentication value calculated by the authenticated member by using the group shared key and the authentication information of the authenticated member according to the group authentication algorithm is the same as the second authentication value calculated by the authenticating member. Because illegal members do not have the same group shared key and group authentication algorithm as the authenticating member, the first authentication value calculated by those members is different from the second authentication value calculated by the authenticating member. Thus, the illegal members cannot be authenticated as legal neighbors. Therefore, the legal neighbor authentication may be performed for the authenticated member by comparing the first authentication value and the second authentication value.

The method for authenticating a legal neighbor in GKM in this embodiment of the present invention is implemented based on the group shared key and group authentication algorithm, without using the identity of the neighbor during the authentication. Thus, the implementation mode for authenticating an entity is not limited; for example, the authentication may be implemented by using an agreed password, featuring good flexibility.

In S202, the authenticated member may send the first authentication value and the authentication information of the authenticated member through a packet. The packet format may be pre-agreed between the members. After receiving the packet, the authenticating member parses out the authentication information of the authenticated member and the first authentication value according to the pre-agreed format to calculate the second authentication value and perform the subsequent comparison.

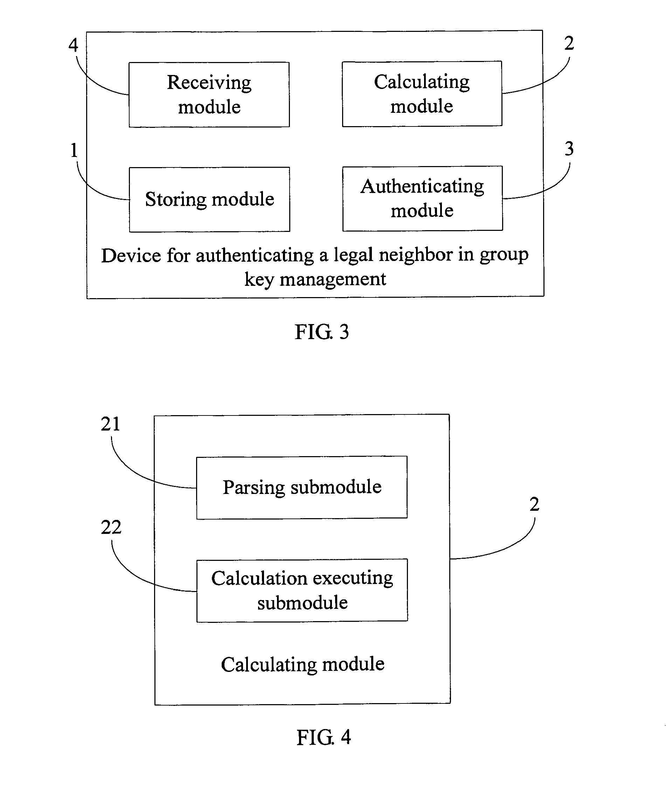

The following describes the device for authenticating a legal neighbor according to GKM in an embodiment of the present invention. As shown in FIG. 3, the device includes a storing module 1, a calculating module 2, and an authenticating module 3.

The storing module 1 is configured to store a group shared key and a group authentication algorithm.

The calculating module 2 is configured to: calculate the first authentication value by using the authentication information of the device and the group shared key in the storing module 1 according to the group authentication algorithm in the storing module 1, and send the first authentication value and the authentication information of the device to other devices; receive the first authentication value and authentication information of other devices sent from other devices, and calculate the second authentication value by using the authentication information of other devices and the group shared key in the storing module 1 according to the group authentication algorithm in the storing module 1.

The authenticating module 3 is configured to authenticate other devices as legal neighbors when confirming that the first authentication value sent from other devices is the same as the calculated second authentication value.

The device for authenticating a legal neighbor in GKM in this embodiment of the present invention is implemented based on the group shared key and group authentication algorithm, without using the identity of the neighbor during the authentication. Thus, the implementation mode for authenticating an entity is not limited; for example, the authentication may be implemented by using an agreed password, featuring good flexibility.

FIG. 4 shows a structure of the calculating module 2. The calculating module 2 includes a parsing submodule 21 and a calculation executing submodule 22.

The parsing submodule 21 is configured to: receive the first authentication value and authentication information of other devices sent from other devices through a packet, and parse out the authentication information of other devices and the first authentication value from the packet according to the pre-agreed format.

The calculation executing submodule 22 is configured to: calculate the first authentication value by using the authentication information of the device and the group shared key in the storing module 1 according to the group authentication algorithm in the storing module 1, and send the authentication information of the device and the first authentication value to other devices; and calculate the second authentication value by using the authentication information of other devices parsed by the parsing submodule 21 and the group shared key in the storing module 1 according to the group authentication algorithm in the storing module 1.

The preceding device may further include a receiving module 4, which is configured to: receive the dynamically updated group shared key and group authentication algorithm, and transmit the updated group shared key and group authentication algorithm to the storing module.

The device for authenticating a legal neighbor in GKM in this embodiment may be a member on the local network that needs the automatic GKM service described in the method embodiment of the present invention.

The method and device for authenticating a legal neighbor in GKM in embodiments of the present invention may be used in different network structures in GKM; that is, they may be used in different scenarios. In addition, the group shared key, group authentication algorithm and authentication information of the authenticating member or the authenticated member may be implemented in different modes in different scenarios. The following describes two exemplary embodiments with reference to specific scenarios and the method and device provided in the preceding embodiments of the present invention.

### First Exemplary Embodiment

This exemplary embodiment is based on the OSPFv3 IPsec scenario and the fact that the legal neighbor authentication is used in the dynamic delegate election. In this exemplary embodiment, the authentication/integrity key in the GSA is reused as the group shared key; the group authentication algorithm is the same as the GSA; the authentication information of the authenticated member is a delegate message; and the members on the local network that needs the automatic GKM service are routers. For better description, it is assumed that the local network in this exemplary embodiment includes two routers that need to authenticate each other as a legal neighbor. These two routers are called the first router and the second router. When the network is initially started, an initial GSA is manually configured for the first router and the second router. The network structure in this exemplary embodiment is shown in FIG. 1.

After the network is started, the first router uses the authentication/integrity key in the GSA to form a message authentication code (MAC) value. The method for calculating the MAC value is defined in RFC 2104, which may be described as the following formula:

$$MAC = H \, (key \; XOR \; opad, \, H \, (key \; XOR \; ipad, Delegate\_message1))$$

In the above formula, H indicates a replaceable algorithm, for example, HAMC_MD5, HAMC_SHA, or HAMC-SHA256; in this exemplary embodiment, H indicates the HMAC algorithm which is the same as the GSA; the key is a replaceable key; in this exemplary embodiment, the key is a group shared key, that is, the authentication/integrity key in the GSA; opad and ipad are parameters defined in RFC 2104, and their values are also the same as those in RFC 2104, which are generally known by those skilled in the art; Delegate_message1 is the authentication information of the first router; XOR indicates an exclusive-OR operation. The MAC value calculated by the first router is called the first authentication value.

The first router adds the first authentication value and delegate message1 to a delegate packet according to a pre-agreed format, and sends the delegate packet to the second router.

After receiving the delegate packet sent from the first router, the second router parses out the Delegate_message1 from the delegate packet according to the agreed format, and calculates a second authentication value by using the authentication/integrity key in the GSA stored in the second router and the parsed Delegate_message1 according to the algorithm which is the same as the GSA and the formula for calculating the MAC value. Then, the second router judges whether the received first authentication value is the same as the second authentication value; if so, the second router regards the first router as a legal neighbor.

A similar process may be adopted when the first router authenticates whether the second router is a legal neighbor. That is, the second router calculates a first authentication value by using the authentication/integrity key in the GSA according to the formula for calculating the MAC value. The authentication information in the first authentication value is the authentication information of the second router, that is, the Delegate_message2. After receiving a delegate packet that carries the first authentication value and the Delegate_message2 according to a pre-agreed format from the second router, the first router parses out the Delegate_message2 from the delegate packet according to the pre-agreed format, and calculates a second authentication value by using the authentication/integrity key in the GSA stored in the first router according to an algorithm which is the same as the GSA. If the calculated second authentication value is the same as the first authentication value sent from the second router, the first router regards the second router as a legal neighbor.

After the first router and the second router complete the legal neighbor authentication, a lot of existing authentication methods may be used, and a router may be elected as the delegate. Thus, the elected delegate may continue performing subsequent functions in automatic GKM. For example, when the group key is dynamically updated, the delegate is responsible for distributing the new GSA pushed by the GCKS to the routers on the local network; and the routers on the local network store the updated GSA.
The specific method used in the entity authentication and election is not the focus of embodiments of the present invention, and is not further described.

The preceding first router and the second router may store latest configurations or the GSA sent by the GCKS according to the GSA update details. When the network is restarted, the routers may also restore the GSA by using the stored contents, so as to continue the legal neighbor authentication process in the delegate election.

In this exemplary embodiment, with the feature that the routers on the local network share the key and algorithm in the GSA, the authenticated router uses a delegate packet to carry the authentication value calculated by using the group shared key and the group authentication algorithm and sends the packet to the authenticating router for authentication. Because the illegal routers cannot obtain a correct GSA, they cannot use the shared key and algorithm in the GSA to calculate a correct MAC value and thus cannot pass the legal neighbor authentication. In addition, the authentication/integrity key in the GSA on the data plane is reused on the control plane. This fully utilizes the existing protocols, without defining new protocols, and thus the implementation is easier.

***Second Exemplary Embodiment***

This exemplary embodiment is still based on the OSPFv3 IPSEC scenario and the fact that the legal neighbor authentication is used in dynamic delegate election. In this exemplary embodiment, however, a new SA defined in the GKM protocol is used to replace the GSA. The new SA is called a group authentication SA (GASA). The GASA includes a group authentication policy and an authentication key, where the group authentication policy includes at least a group authentication algorithm, a key length, and a key lifecycle. For better description, it is assumed that the local network in this exemplary embodiment includes two routers that need to authenticate each other as a legal neighbor. These two routers are called the third router and the fourth router. When the network is initially started, an initial GASA is manually configured for the third router and the fourth router. The network structure in this exemplary embodiment is shown in FIG. 1.

After the network is started, the third router calculates the MAC value by using the authentication key and authentication information of the third router in the GASA. The method for calculating the MAC value is the same as that in the first exemplary embodiment, and is described as the following formula:

MAC = H (key XOR opad, H (key XOR ipad,Delegate_message3)).

In the above formula, the meanings of opad, ipad, and XOR are the same as those described in the first exemplary embodiment; the H algorithm is the group authentication algorithm in the GASA; the key is the authentication key in the GASA; the Delegate_message3 is the authentication information of the third router. The MAC value calculated by the third router is called the first authentication value.

The third router adds the first authentication value and the delegate message3 to a delegate packet according to a pre-agreed format, and sends the delegate packet to the fourth router.

After receiving the delegate packet sent from the third router, the fourth router parses out the Delegate_message3 from the delegate packet according to the agreed format, and calculates a second authentication value by using the group shared key and group authentication algorithm in the GASA stored in the fourth router according to the formula for calculating the MAC value. Then, the fourth router judges whether the second authentication value is the same as the first authentication value sent from the third router; if so, the fourth router regards the third router as a legal neighbor.

A similar process is adopted when the third router authenticates whether the fourth router is a legal neighbor. That is, the fourth router calculates a first authentication value by using the authentication key in the GASA and the authentication information of the fourth router according to the formula for calculating the MAC value. The authentication information in the MAC value is the authentication information of the fourth router, that is, the delegate_message4. The fourth router adds the first authentication value and the delegate_message4 to a delegate packet according to a pre-agreed format, and sends the delegate packet to the third router. The third router parses out the Delegate_message4 from the delegate packet according to the pre-agreed format, and calculates a second authentication value by using the group shared key in the GASA stored in the third router according to the group authentication algorithm. If the calculated second authentication value is the same as the first authentication value sent from the fourth router, the third router regards the fourth router as a legal neighbor.

In this exemplary embodiment, the GCKS may dynamically update the GASA according to the key lifecycle, and pushes the updated GASA to each member on the local network through the elected delegate.

After the third router and the fourth router complete the legal neighbor authentication, a lot of existing authentication methods may be used, and a router may be elected the delegate. Thus, the elected delegate may continue performing subsequent functions in automatic GKM. For example, when the group key is updated, the delegate is responsible for distributing the new GASA pushed by the GCKS to the routers on the local network. The specific method used in the entity authentication and election is not the focus of embodiments of the present invention, and is not further described.

The preceding third router and the fourth router may store latest configurations or the GASA sent by the GCKS according to the GASA update details. After the network is restarted, the routers may automatically restore the GASA by using the stored contents, so as to continue the legal neighbor authentication process in the delegate election.

The method and device for authenticating a legal neighbor in GKM in embodiments of the present invention are implemented based on the group shared key and group authentication algorithm, without using the identity of the neighbor during the authentication. Thus, the implementation mode for authenticating an entity is not limited; for example, the authentication may be implemented by using an agreed password, thus featuring good flexibility.

In the method for authenticating a legal neighbor in GKM in embodiments of the present invention, the process may be compiled in independent software. The independent software is stored in members on the local network that needs the automatic GKM service, the storage medium of which may be a computer readable medium. The software may be called to execute the legal neighbor authentication.

Through the preceding description of embodiments of the present invention, it is understandable to those skilled in the art that embodiments of the present invention may be implemented by hardware or by software in combination with a necessary hardware platform. Thus, the technical solution of the present invention may be made into software. The software may be stored in a non-volatile storage medium (for example, a CD-ROM, a USB disk, and a mobile hard disk), and include several instructions that instruct a computer device (such as a personal computer, a server, or a network device) to perform the methods provided in each embodiment of the present invention.

Although the present invention has been described through several exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the claims or their equivalents.

**Claims**

1. A method for authenticating a legal neighbor in group key management (GKM), comprising: storing, by members on a local network that needs an automatic GKM service, a group shared key and a group authentication algorithm, and when the members on the local network that needs the automatic GKM service authenticate a neighbor, the method further comprises:

by an authenticating member, receiving a first authentication value and authentication information of an authenticated member from the authenticated member, wherein the first authentication value is calculated by the authenticated member by using the group shared key and the authentication information stored in the authenticated member according to the group authentication algorithm stored in the authenticated member;

calculating a second authentication value by using the received authentication information of the authenticated member and the group shared key stored in the authenticating member according to the group authentication algorithm stored in the authenticating member; and

authenticating the authenticated member as a legal neighbor when confirming that the first authentication value is the same as the second authentication value.

2. The method of claim 1, wherein:

the authenticated member adds the first authentication value and the authentication information of the authenticated member to a packet according to a pre-agreed format for sending; and

before the authenticating member uses the authentication information of the authenticated member, the method further comprises: parsing out the authentication information of the authenticated member and the first authentication value from the packet sent from the authenticated member according to the pre-agreed format.

3. The method of claim 1, wherein the authentication information of the authenticated member is an Delegate_message and the first authentication value calculated by the authenticated member and the second authentication value calculated by the authenticating member are message authentication code (MAC) values calculated by the following formula:

$$MAC = H\ (key\ XOR\ opad,\ H\ (key\ XOR\ ipad,\ Delegate\_message));$$

wherein H indicates the group authentication algorithm, the key is the group shared key, ipad and opad are random numbers, and XOR indicates an exclusive-OR operation.

4. The method of claim 1 or 3, wherein the process of storing the group shared key and the group authentication algorithm by the members on the local network that needs the automatic GKM service comprises:

by the members, receiving a group security association (GSA), and storing a group authentication algorithm and a group shared key in the GSA.

5. The method of claim 4, wherein the group shared key in the GSA is an authentication/integrity key.

6. The method of claim 4, wherein the GSA is updated dynamically, and the process of storing the group shared key and group authentication algorithm in the GSA by the members on the local network that needs the automatic GKM service comprises:

storing, by the members, the group shared key and group authentication algorithm in the updated GSA.

7. The method of claim 1 or 3, wherein before the members on the local network that needs the automatic GKM service store the group shared key and group authentication algorithm, the method further comprises: adding a security association (SA) to a GKM Protocol, wherein the SA can transmit at least the following information:

group shared key, group authentication algorithm, key length, and key lifecycle; and

the process of storing the group shared key and group shared algorithm by the members on the local network that needs the automatic GKM service comprises: by the members, receiving the new SA and storing the group shared key and group authentication algorithm in the SA.

8. The method of claim 7, wherein the SA is updated dynamically according to the key lifecycle, and the process of storing the group shared key and group authentication algorithm in the SA by the members on the local network that needs the automatic GKM service comprises:

by the members, receiving the updated SA and storing the group shared key and group authentication algorithm in the updated SA.

9. A device for authenticating a legal neighbor in group key management (GKM), comprising a storing module, a calculating module, and an authenticating module, wherein:

the storing module is configured to store a group shared key and a group authentication algorithm;
the calculating module is configured to: calculate a first authentication value by using authentication information of the device and the group shared key in the storing module according to the group authentication algorithm in the storing module, and send the authentication information of the device and the first authentication value to other devices; receive the first authentication value and authentication information of other devices sent from other devices, and calculate a second authentication value by using the group shared key in the storing module and the authentication information of other devices according to the group authentication algorithm in the storing module; and
the authenticating module is configured to authenticate other devices as legal neighbors when confirming that the received first authentication value is the same as the calculated second authentication value.

10. The device of claim 9, wherein the calculating module comprises a parsing submodule and a calculation executing submodule, wherein:

the parsing submodule is configured to: receive the first authentication value and authentication information of other devices sent from other devices through a packet, and parse out the authentication information of other devices and the first authentication value from the packet according to a pre-agreed format; and
the calculation executing submodule is configured to: calculate the first authentication value by using the authentication information of the device and the group shared key in the storing module according to the group authentication algorithm in the storing module, and send the authentication information of the device and the first authentication value to other devices; and calculate the second authentication value by using the authentication information of other devices parsed by the parsing submodule and the group shared key in the storing module according to the group authentication algorithm in the storing module.

11. The device of claim 9, further comprising a receiving module, configured to: receive the updated group shared key and group authentication algorithm, and transmit the updated group shared key and group authentication algorithm to the storing module.

FIG. 1

S201

The authenticating member receives the first authentication value and the authentication information of the authenticated member sent from the authenticated member

S202

The authenticating member calculates a second authentication value by using the received authentication information of the authenticated member and the group shared key stored in the authenticating member according to the group authentication algorithm stored in the authenticating member

S203

The authenticating member authenticates the authenticated member as a legal neighbor when confirming that the first authentication value is the same as the second authentication value

FIG. 2

4

Receiving module

Calculating module

2

1

Storing module

Authenticating module

3

Device for authenticating a legal neighbor in group key management

FIG. 3

21

Parsing submodule

2

22

Calculation executing submodule

Calculating module

FIG. 4

<div align="center">

**INTERNATIONAL SEARCH REPORT**

</div>

| | International application No. |
|---|---|
| | PCT/CN2008/071308 |

**A. CLASSIFICATION OF SUBJECT MATTER**

<div align="center">See extra sheet</div>

According to International Patent Classification (IPC) or to both national classification and IPC

**B. FIELDS SEARCHED**

Minimum documentation searched (classification system followed by classification symbols)

IPC: H04L9/32,9/30,9/28,9/14,9/00,H04Q7/32,7/20,7/00,G06F15/00,21/00

Documentation searched other than minimum documentation to the extent that such documents are included in the fields searched

Electronic data base consulted during the international search (name of data base and, where practicable, search terms used)

WPI;EPODOC;PAJ;IEEE;CNPAT;CNKI: authenticat+, identity, key, encrypt+, sav+, updat+, send, transmi+, compare+

**C. DOCUMENTS CONSIDERED TO BE RELEVANT**

| Category* | Citation of document, with indication, where appropriate, of the relevant passages | Relevant to claim No. |
|---|---|---|
| X | CN1925398A (SHANGHAI LINGUO SCI & TECHNOLOGY CO., LTD.) 7 Mar.2007 (07.03.2007) Page 5, line 14 – page 6, line 5, Fig.1 | 1-11 |
| A | CN1764296A (BEIJING WATCH DATA SYSTEM CO., LTD.)  26 Apr. 2006 (26.04.2006) The whole document | 1-11 |
| A | CN1655506A (SAMSUNG ELECTRONICS CO., LTD.) 17 Aug.2005 (17.08.2005) The whole document | 1-11 |
| A | CN1698309A (SONY CORP.) 16 Nov. 2005 (16.11.2005) the whole document | 1-11 |
| A | US2005/0076216A1 (Nyberg) 7Apr.2005 (07.04.2005) the whole document | 1-11 |
| A | US2005/0071677A1 (Khanna et al.) 31 Mar.2005 (31.03.2005) the whole document | 1-11 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 6 Jul. 2008 (06.07.2008) | **21 Aug. 2008 (21.08.2008)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **LIU, Jianbo** Telephone No. (86-10)62413304 |
|---|---|

Form PCT/ISA/210 (second sheet) (April 2007)

<center>**INTERNATIONAL SEARCH REPORT**
Information on patent family members</center>

| International application No. |
|---|
| PCT/CN2008/071308 |

| Patent Documents referred in the Report | Publication Date | Patent Family | Publication Date |
|---|---|---|---|
| CN1925398A | 07.03.2007 | None | |
| CN1764296A | 26.04.2006 | WO2006042469A1 | 27.04.2006 |
| | | EP1804418A1 | 04.07.2007 |
| | | US2007/0186115A1 | 09.08.2007 |
| CN1655506A | 17.08.2005 | JP2005196790A | 21.07.2005 |
| | | KR20050072508A | 12.07.2005 |
| | | KR100610317B1 | 09.08.2006 |
| CN1698309A | 16.11.2005 | WO2004095772A1 | 04.11.2004 |
| | | JP2005012732A | 13.01.2005 |
| | | EP1617588A1 | 18.01.2006 |
| | | US2006/0117175A1 | 01.06.2006 |
| | | KR20060003319A | 10.01.2006 |
| US2005/0076216A1 | 07.04.2005 | None | |
| US2005/0071677A1 | 31.03.2005 | US7299354B2 | 20.11.2007 |

Form PCT/ISA/210 (patent family annex) (April 2007)

# INTERNATIONAL SEARCH REPORT

| International application No. |
|---|
| PCT/CN2008/071308 |

CLASSIFICATION OF SUBJECT MATTER

H04L9/32 (2006.01) i
H04L9/00 (2006.01) i

Form PCT/ISA/210 (extra sheet) (April 2007)

15